(19) Europäisches Patentamt
European Patent Office
Office européen des brevets

(11) **EP 4 101 590 A1**

(12) **EUROPÄISCHE PATENTANMELDUNG**

(43) Veröffentlichungstag:
**14.12.2022   Patentblatt 2022/50**

(21) Anmeldenummer: **22175467.4**

(22) Anmeldetag: **25.05.2022**

(51) Internationale Patentklassifikation (IPC):
***B24C 7/00*** *(2006.01)*      *B24C 3/14* *(2006.01)*

(52) Gemeinsame Patentklassifikation (CPC):
**B24C 7/00; B24C 7/0092;** B24C 3/14

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **10.06.2021   DE 102021115034**

(71) Anmelder: **Rösler Holding GmbH**
**96231 Bad Staffelstein (DE)**

(72) Erfinder:
 • **REINMANN, Jan**
  **98646 Straufhain (DE)**
 • **LISKE, Marco**
  **96450 Coburg (DE)**
 • **KOLLACKS, Tom**
  **96120 Bischberg (DE)**
 • **ECKSTEIN, Marc**
  **96328 Küps (DE)**

(74) Vertreter: **Manitz Finsterwald**
**Patent- und Rechtsanwaltspartnerschaft mbB**
**Martin-Greif-Strasse 1**
**80336 München (DE)**

(54)  **VERFAHREN ZUM BETRIEB EINER STRAHLANLAGE**

(57)    Beim Verfahren zum Betrieb einer Strahlanlage (10) werden Verfahrensparameter von einem Bediener vorgegeben und aus diesen Verfahrensparametern wird ein erforderlicher Strahlmitteldurchsatz berechnet und eingestellt.

Fig. 2

EP 4 101 590 A1

**Beschreibung**

Die vorliegende Erfindung betrifft ein Verfahren zum Betrieb einer Strahlanlage, die eine Steuerung und zumindest eine von einem Elektromotor angetriebene Turbine aufweist, mit der körniges Strahlmittel beschleunigt und in einer Strahlkammer auf Werkstücke abgeworfen wird. Derartige Strahlanlagen sind grundsätzlich bekannt und umfassen üblicherweise verschiedene Komponenten wie Strahlmittelbeschleunigung, Strahlmittelrückförderung, Strahlmittelaufbereitung, Teiletransport sowie Entstaubung.

Für einen ordnungsgemäßen Betrieb einer solchen Strahlanlage ist es einerseits wünschenswert, dass Störungen rechtzeitig erkannt werden. Andererseits soll die Strahlanlage kostengünstig sein und effizient betrieben werden können.

Es ist deshalb die Aufgabe der vorliegenden Erfindung, ein Verfahren zum Betrieb einer Strahlanlage der eingangs genannten Art zu schaffen, mit dem zuverlässig ein effizienter Betrieb erreicht werden kann.

Die Lösung dieser Aufgabe erfolgt durch die Merkmale des Anspruchs 1 und insbesondere dadurch, dass bei dem Verfahren in der Steuerung eine gewünschte Abwurfgeschwindigkeit und eine gewünschte Strahlleistung der Turbine als Sollwerte eingegeben werden, dass aus diesen vorgegebenen Sollwerten ein erforderlicher Strahlmitteldurchsatz berechnet wird, und dass auf Grundlage dieses berechneten Strahlmitteldurchsatzes die Menge an Strahlmittel eingestellt wird, das der Turbine zugeführt wird. Erfindungsgemäß wird somit der Strahlmitteldurchsatz, d.h. die Menge an Strahlmittel, das der Turbine zugeführt wird, nicht gemessen, sondern dieser wird aufgrund der vorgegebenen Sollwerte berechnet, um diesen beispielsweise mit der tatsächlichen an den Elektromotor abgegebenen Leistung vergleichen zu können, die beispielsweise aus einem dem Elektromotor vorgeschalteten Frequenzumrichter ausgegeben werden kann. Somit muss der Strahlmitteldurchsatz nicht mit aufwendigen und anfälligen Sensoren gemessen werden und der Betrieb der Strahlanlage lässt sich sehr effizient darstellen, da die Steuerung sehr schnell auf geänderte Sollwerte reagieren kann.

Vorteilhafte Ausführungsformen der Erfindung sind in der Beschreibung, der Zeichnung sowie den Unteransprüchen beschrieben.

Nach einer ersten vorteilhaften Ausführungsform kann die Abwurfgeschwindigkeit und die Strahlleistung in der Steuerung als prozentualer Wert eingegeben werden. Hierzu wird in der Steuerung beispielsweise eine maximal mögliche Abwurfgeschwindigkeit und eine maximal mögliche Strahlleistung vorgegeben. Dies hat den Vorteil, dass der Bediener der Anlage keine konkreten Zahlenwerte in Erinnerung behalten und eingeben muss, die sich auch von Anlage zu Anlage oder von Turbine zu Turbine unterscheiden. Vielmehr kann der Bediener beispielsweise die gewünschte Abwurfgeschwindigkeit zwischen 50% und 100% und eine gewünschte Leistung zwischen 0% und 100% eingeben (beispielsweise 60% Geschwindigkeit und 90% Leistung), was die Bedienfreundlichkeit erhöht.

Nach einer weiteren vorteilhaften Ausführungsform kann in der Steuerung eine Kennlinie hinterlegt werden, welche die Abhängigkeit der Abwurfgeschwindigkeit der Turbine von der Drehzahl des Elektromotors wiedergibt. Hierdurch kann die Steuerung die Abwurfgeschwindigkeit aus der vom Bediener vorgegebenen Prozentzahl im Verhältnis zur Motornenndrehzahl (bei Betriebsspannung) berechnen und mit Hilfe der Kennlinie die zum Erreichen der gewünschten Abwurfgeschwindigkeit erforderliche Frequenz ermitteln, mit welcher der Elektromotor betrieben werden muss. Die ermittelte Frequenz kann dann an einen Frequenzumrichter ausgegeben werden, der die Drehzahl des Elektromotors regelt.

Nach einer weiteren vorteilhaften Ausführungsform kann die Einstellung der Menge an Strahlmittel durch ein von der Steuerung angesteuertes Stellelement erfolgen, beispielsweise durch einen Schieber oder auch Muschelschieber, der aus dem Stand der Technik grundsätzlich bekannt ist. Erfindungsgemäß wird allerdings der Schieber dazu verwendet, die Zufuhr von Strahlmittel zur Turbine nicht nur zu ermöglichen oder vollständig zu unterbrechen. Vielmehr wird der Schieber durch die Steuerung so angesteuert, dass der Öffnungsgrad variiert bzw. angepasst wird, um die berechnete Menge an Strahlmittel durch den Schieber zur Turbine durchzulassen.

Hierzu kann nach einer weiteren vorteilhaften Ausführungsform in der Steuerung eine Kennlinie hinterlegt werden, welche die Abhängigkeit des Strahlmitteldurchsatzes von dem Öffnungsgrad des Stellelements wiedergibt. Mit Hilfe einer solchen Kennlinie kann dann von der Steuerung der Öffnungsgrad des Stellelements vorgegeben werden, mit dem der berechnete Strahlmitteldurchsatz erzielt wird, wodurch eine sehr schnelle und präzise Einstellung des Strahlmitteldurchsatzes möglich ist.

Nach einer weiteren vorteilhaften Ausführungsform kann die Kennlinie dadurch erzeugt werden, dass das Stellelement in verschiedene Öffnungspositionen gebracht wird, und dass zu jeder Position aus der aktuellen Strahlleistung und der aktuellen Abwurfgeschwindigkeit der aktuelle Strahlmitteldurchsatz berechnet und abgespeichert wird. Wenn in der Steuerung der durch den Bediener geforderte Strahlmitteldurchsatz berechnet wird, kann die Steuerung aus dieser Kennlinie den erforderlichen Öffnungsgrad für das Stellelement auslesen und an das Stellelement ausgeben. Der Vorteil einer solchen Kennlinienregelung ist unter anderem, dass diese drehzahlunabhängig ist. Zudem können in zeitlichen Abständen mehrere solcher Kennlinien in der Steuerung hinterlegt werden, wobei bei einer signifikanten Änderung der Kennlinien in der Steuerung eine Störung oder ein Verschleiß angezeigt werden kann. Wird beispielsweise der erforderliche Öffnungsgrad im Laufe der Zeit größer, um die gleiche Leistungsaufnahme des Elektromotors zu generieren, so könnte es sich um einen Verschleiß der Turbine handeln. Hierbei können in der Steuerung auch Toleranzfelder angegeben werden, innerhalb derer sich die Kennlinien über bestimmte Zeiträume verändern können. Erst wenn diese verlassen werden, es sich also um eine nennenswerte oder signifikante Veränderung der Kennlinien im Laufe der Zeit handelt, kann eine Störungs- oder Verschleißmeldung ausgegeben werden.

Nach einer weiteren vorteilhaften Ausführungsform kann das Stellelement bei Betriebsbeginn in eine vorgegebene Endstellung gefahren werden, so dass das Stellelement bei Betriebsbeginn eine definierte Startposition einnimmt, und diese Position kann dann als Nullpunkt definiert werden, von dem aus die vorgegebenen Öffnungswege angefahren werden, um eine Reproduzierbarkeit des Systems zu gewährleisten.

Nach einer weiteren vorteilhaften Ausführungsform kann der Elektromotor von einem Frequenzumrichter angesteuert werden, wobei von diesem die Drehzahl, die Stromaufnahme, die elektrische Leistung und/oder das Drehmoment des Elektromotors an die Steuerung übertragen wird oder werden. Durch diese Betriebsparameter kann die Steuerung eine Vielzahl von Steuer- und Regelungsaufgaben übernehmen und insbesondere auch eine Auswertung der Effizienz der Anlage vornehmen. Mit Hilfe der tatsächlichen Drehzahl kann mit Hilfe der vorstehend genannten Kennlinie die aktuelle Abwurfgeschwindigkeit des Strahlmittels berechnet werden. Mit Hilfe der Wirkleistung und der aktuellen Abwurfgeschwindigkeit kann auch der aktuelle Strahlmitteldurchsatz berechnet und ausgegeben werden.

Nach einer weiteren vorteilhaften Ausführungsform kann die Steuerung die tatsächliche Strahlleistung der Turbine aus der elektrischen Leistung des Elektromotors und einem zuvor ermittelten Turbinenwirkungsgrad berechnen, der in der Steuerung abgespeichert wird. Dieser Turbinenwirkungsgrad ist von der Bauart der Turbine abhängig, kann für eine vereinfachte Berechnung jedoch als konstant angenommen werden, beispielsweise mit einem Wert von 0,75. Mit Hilfe der aus der elektrischen Leistung ermittelten tatsächlichen Strahlleistung der Turbine lässt sich unter Berücksichtigung der tatsächlichen Strahlzeit, d.h. derjenigen Zeit, in der die Turbine unter Last läuft, die verrichtete Strahlarbeit berechnen, so dass eine Vielzahl von Auswertungen auf Basis der verrichteten Strahlarbeit vorgenommen werden können, was nachfolgend noch näher beschrieben wird.

Nach einer weiteren vorteilhaften Ausführungsform kann in der Steuerung ein Grenzwert für einen maximal zulässigen Strahlmitteldurchsatz eingegeben werden, so dass verhindert wird, dass eine Rückfördereinrichtung für Strahlmaterial nicht überlastet wird und dass die maximale Strahlmittelmenge der Turbine nicht überschritten wird. Weiterhin kann die Steuerung eine Fehlermeldung ausgeben, wenn eine maximal zulässige Motorleistung überschritten wird.

Nach einer weiteren vorteilhaften Ausführungsform kann ein Vorratsbehälter für Strahlmittel vorgesehen werden, wobei die räumliche Verteilung des in den Vorratsbehälter zu fördernden Strahlmittels detektiert wird. Eine solche räumliche Erfassung des Strahlmittels vor Eintritt in den Vorratsbehälter lässt sich nicht nur zur Detektion eines maximalen Strahlmitteldurchsatzes heranziehen. Vielmehr kann hierdurch auch der prozentuale Anteil des Strahlmitteldurchsatzes ermittelt werden. Eine Auswertung der Plausibilität der momentan tatsächlich applizierten Strahlmittelmenge in Relation zur Erfassung der räumlichen Verteilung lässt dann Rückschlüsse in Bezug auf den aktuellen Zustand der Strahlanlage und die Gleichmäßigkeit des Prozesses zu. Es kann also bei der Steuerung eine Prozessüberwachung erfolgen, indem eine Korrelation zwischen der detektierten räumlichen Verteilung des in den Vorratsbehälter zu fördernden Strahlmittels und dem berechneten Strahlmitteldurchsatz hergestellt wird.

Nach einer weiteren vorteilhaften Ausführungsform kann sowohl aus der Strahlkammer wie auch aus dem Bereich einer Strahlmittelreinigungseinheit Luft abgesaugt werden, wobei der Volumenstrom beider Absaugungen erfasst und überwacht wird. Die Erfassung der Volumenströme kann durch Differenzdruckmesssysteme, Staurohre, Flügelanemometer oder kalorimetrische Messsensoren erfolgen. Die Überwachung, Aufzeichnung und Auswertung der Volumenströme kann dann einen direkten Aufschluss über die produzierte Teilequalität in Bezug auf die Oberflächenreinheit der Bauteile nach dem Strahlprozess und in Bezug auf die Konstanz der Strahlmittelreinigung geben. Hierzu kann es auch vorteilhaft sein, wenn der Antriebsmotor der Luftabsaugung mit einem Frequenzumrichter ausgestattet ist, über den eine Konstanz der Volumenströme mit Hilfe einer Drehzahl- und Leistungsregelung sichergestellt wird.

Nach einem weiteren Aspekt der vorliegenden Erfindung kann bei einer Strahlanlage mit einer von einem Elektromotor angetriebenen Turbine die Strahlleistung der Turbine und das Produkt aus Strahlleistung und Strahlzeit ermittelt und von einer Steuerung als Strahlarbeit angezeigt werden. Die Strahlleistung der Turbine ergibt sich dabei aus dem Produkt der elektrischen Leistung und des Turbinenwirkungsgrads. Durch die Ermittlung der Strahlarbeit kann die zusammengefasste Strahlarbeit der gesamten Strahlanlage ermittelt werden, die selbstverständlich nicht nur eine sondern mehrere Turbinen umfassen kann. Diese kumulierte geleistete Strahlarbeit kann dann als Grundlage für die Auswertung von Anlagenkosten, der Maschinenausbringung und der Medienverbräuche als Basis herangezogen werden. Darstellbar sind beispielsweise der detaillierte Strahlmittelverbrauch (insgesamt und pro Turbine) oder die bearbeitete Teilemenge pro Kilowattstunde geleistete Strahlarbeit. Der Strahlmittelverbrauch selbst kann auf an sich bekannte Art und Weise beispielsweise über ein gravimetrisches, volumenstrom- oder gewichtsbasierendes Dosiersystem erfasst werden, welches bei Bedarf die von der Strahlanlage angeforderte Strahlmittelmenge nachdosiert.

Nach einem weiteren Aspekt der vorliegenden Erfindung betrifft diese eine Anlage, die insbesondere zur Durchführung eines Verfahrens der vorstehenden Art geeignet und eingerichtet ist, wobei die Strahlanlage eine Steuerung und zumindest eine von einem Elektromotor angetriebene Turbine aufweist, mit der Strahlmittel beschleunigt und in einer Strahlkammer abgeworfen wird. Die Steuerung dieser Strahlanlage ist dazu ausgebildet und eingerichtet, aus einer vorgegebenen Abwurfgeschwindigkeit und einer vorgegebenen Strahlleistung einen erforderlichen Strahlmitteldurchsatz zu berechnen, und auf Grundlage des berechneten Strahlmitteldurchsatzes die Menge an Strahlmittel vorzugeben, die der Turbine zugeführt wird.

Hierbei kann nach einer vorteilhaften Ausführungsform die Steuerung in Echtzeit die geleistete Strahlarbeit der Strahlanlage und/oder einzelner Turbinen der Strahlanlage ermitteln und diverse Betriebsparameter der Strahlanlage im Verhältnis zur geleisteten Strahlarbeit ausgeben, anzeigen, abspeichern und/oder auswerten.

Nach einer weiteren vorteilhaften Ausführungsform kann für die Einstellung des Strahlmitteldurchsatzes in der Strahlanlage ein Schieber vorgesehen sein, der von einem mit einer Wegmessung versehenen Aktor verstellbar ist, wobei der Schieber von einem weiteren Aktor gegen einen festen Anschlag bewegbar ist. Mit einem solchen Schieber wird einerseits eine genaue Einstellung des Öffnungsgrades des Schiebers möglich, andererseits kann der Schieber bei Betriebsbeginn gegen einen festen, insbesondere mit einem Initiator versehenen Anschlag bewegbar sein, um reproduzierbare Verhältnisse zu schaffen.

Nach einer weiteren vorteilhaften Ausführungsform kann die Steuerung mit einer Schnittstelle zur Übertragung von Daten an ein öffentliches oder privates Netzwerk versehen sein. So kann eine bidirektionale oder unidirektionale Schnittstelle vorgesehen werden, mit der Daten der Steuerung und generierte Vorauswertungen einem Edge Device und/oder auf einem Webbrowser zur Verfügung gestellt werden. Auf diese Weise ist ein Zugriff auf generierte Auswertungen direkt an der Maschine oder über das Internet möglich. Eine unidirektionale Schnittstelle bietet den Vorteil einer erhöhten Sicherheit der Maschine in Bezug auf den Zugriff auf maschinen- und sicherheitsrelevante Funktionen von außen oder über ein Datennetzwerk. Eine Anzeige und Visualisierung der ausgewerteten oder aufbereiteten Daten kann in Form von absoluten Daten, Diagrammen, Bildern und visualisierten Darstellungen auf verschiedensten Hardwaregeräten erfolgen, insbesondere wenn diese eine Anzeige mit Hilfe eines Browsers ermöglichen.

Nachfolgend wird die vorliegende Erfindung rein beispielhaft anhand verschiedener Ausführungsformen unter Bezugnahme auf die beigefügten Zeichnungen beschrieben. Es zeigen:

Fig. 1    eine schematische Darstellung einer Strahlanlage;
Fig. 2    eine schematische Darstellung eines Verfahrens zum Betrieb einer Strahlanlage; und
Fig. 3    eine perspektivische Ansicht eines Stellelements.

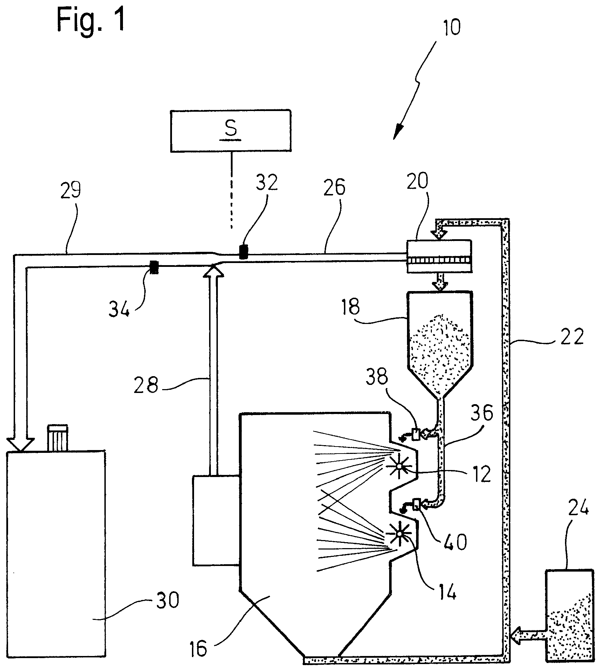

Fig. 1 zeigt eine schematische Darstellung einer Strahlanlage 10, die (bei dem dargestellten Ausführungsbeispiel) zwei Turbinen 12 und 14 aufweist, die zur Strahlmittelbeschleunigung verwendet werden, und die jeweils von einem Elektromotor (in Fig. 1 nicht dargestellt) angetrieben werden. Die Turbinen sind in einer Strahlkammer 16 angeordnet, durch die Teile bzw. Werkstücke hindurchgeführt und mit körnigem Strahlmittel gestrahlt werden. Diese Art von Strahlanlagen können sowohl als Durchlaufanlagen als auch Chargenanlagen zur Schüttgut oder auch Einzelteilbearbeitung ausgeführt sein,

Die Zuführung von Strahlmittel zu den Turbinen erfolgt über einen Vorratsbehälter 18, dem eine Reinigungseinheit 20 in Form eines Windsichters vorgeschaltet ist. Eine Rückführung von Strahlmittel aus der Strahlkammer 16 erfolgt über eine Rückfördereinheit 22, beispielsweise ein Becherwerk, das Strahlmittel aus der Strahlkammer 16 in den Windsichter 20 fördert. Eine Nachdosierung von Strahlmittel kann über einen Vorratsbehälter 24 erfolgen, der als gravimetrische Strahlmitteldosierung fungiert, so dass das Gewicht bzw. die Menge an nachdosiertem Strahlmittel jederzeit ermittelt werden kann.

Um das Strahlmittel zu reinigen, d.h. von Staub und Unterkorn zu befreien, wird sowohl aus der Strahlkammer 16 über eine Leitung 28 als auch aus dem Windsichter 20 über eine Leitung 26 Luft abgesaugt und in eine Absauganlage 30 geführt, in der die Luft gefiltert und gereinigt wird.

Um sowohl den aus der Strahlkammer 16 abgesaugten Luftstrom wie auch den aus dem Windsicher 20 abgesaugten Luftstrom getrennt zu erfassen, ist in der Leitung 26 ein erster Volumenstromsensor 32 vorgesehen und in der zur Absauganlage 30 führenden Leitung 29 ist ein weiterer Volumenstromsensor 34 vorgesehen. Durch diese beiden Volumenstromsensoren kann sowohl der Volumenstrom in der Leitung 26 wie auch der in der Leitung 28 berechnet bzw. gemessen werden. Selbstverständlich könnte der Volumensensor 34 oder der Volumensensor 32 auch in der Leitung 28 angeordnet werden.

Um die Menge an Strahlmittel zu regulieren, die jeder Turbine 12 und 14 zugeführt wird, ist in der Leitung 36 zwischen dem Vorratsbehälter 18 und den Turbinen 12 und 14 vor jeder Turbine jeweils ein Stellelement 38 und 40 angeordnet, das als Schieber, insbesondere als Muschelschieber ausgebildet ist.

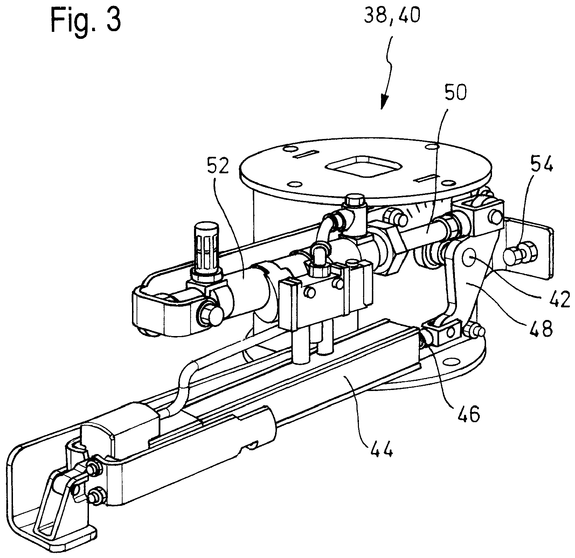

Fig. 3 zeigt eine perspektivische Darstellung einer Ausführungsform eines Muschelschiebers 38, 40, der eine in einem Gehäuse angeordnete (nicht dargestellte) Schieberklappe aufweist, die durch eine Welle 42 verstellbar ist. Durch Verdrehen der Welle 42 kann der Öffnungsgrad des Schiebers von 0 bis 100% verändert werden. Zum Verschwenken der Welle 42 ist ein mit einer Wegmessung versehener Aktor 44 vorgesehen, der bei dem dargestellten Ausführungsbeispiel als elektromechanischer Zylinder ausgebildet ist, der seine zugehörige Kolbenstange 46 beispielsweise mit Hilfe eines Spindelantriebs ein- und ausfahren kann. Über die eingebaute Wegmessung kann eine genaue Bestimmung der jeweiligen Position der Kolbenstange 46 und damit auch des Öffnungsgrads detektiert werden. Die Kolbenstange 46 ist mit einem Schwenkhebel 48 verbunden, der wiederum mit der Welle 42 in Verbindung steht, so dass durch Ausfahren der Kolbenstange 46 die Welle 42 verschwenkt werden kann.

Ebenfalls angelenkt an die Welle 42 ist eine weitere Kolbenstange 50 eines weiteren Aktors 52, der beim dargestellten Ausführungsbeispiel als Pneumatikzylinder ausgebildet ist. Durch diesen Pneumatikzylinder kann durch Ausfahren der Kolbenstange 50 die Welle 42 gegen einen festen Anschlag 54 bewegt werden, so dass die Kolbenstange 46 des Aktors 44 durch den Aktor 52 in eine definierte Ausgangsstellung gebracht werden kann.

Wie Fig. 1 zeigt, ist für die Steuerung, Überwachung und Auswertung der gesamten Strahlanlage eine Steuerung S vorgesehen, die mit sämtlichen Sensoren, Antrieben, Motoren, Aggregaten und sonstigen Komponenten der Strahlanlage in Verbindung steht. Mit Hilfe der Steuerung S kann die Strahlanlage wie nachfolgend beschrieben betrieben, überwacht und ausgewertet werden.

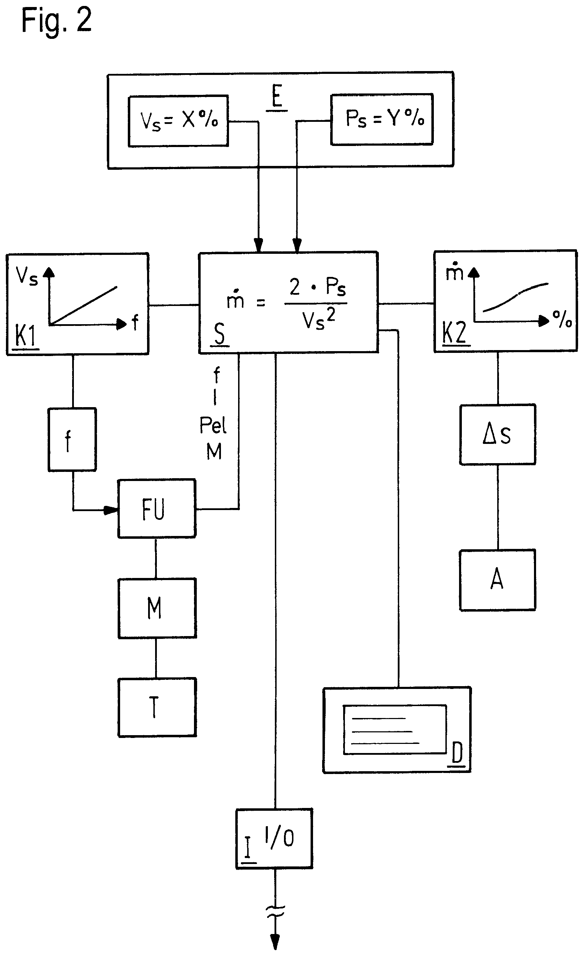

Fig. 2 verdeutlicht die in der Steuerung eingerichteten Verfahrensschritte zum Betrieb der in Fig. 1 dargestellten Strahlanlage. So umfasst die Steuerung S eine Eingabeeinrichtung E, in der ein Bediener eine gewünschte Abwurfgeschwindigkeit vs sowie eine gewünschte Strahlleistung Ps oder den gewünschten Strahlmitteldurchsatz der Turbine eingeben kann. Sowohl die Abwurfgeschwindigkeit wie auch die Strahlleistung / der Strahlmitteldurchsatz der Turbine können dabei als prozentualer Wert X und Y oder Absolutwert (Gewicht pro Zeiteinheit und Abwurfgeschwindigkeit) eingegeben werden. Beispielsweise kann eine gewünschte Abwurfgeschwindigkeit vs von 60% und eine gewünschte Strahlleistung Ps von 100% als Sollwert vorgegeben werden.

In der Steuerung S wird dann aus diesen beiden Sollwerten ein erforderlicher Strahlmitteldurchsatz m als Gewicht pro Zeiteinheit berechnet, der sich aus der Formel $m = 2 \cdot P_S / v_S^2$ ergibt. Mit der Strahlmittelgeschwindigkeit vs kann über eine, in der Steuerung S hinterlegte Kennlinie K1, die für den Betrieb der zugehörigen Turbine erforderliche Frequenz f ermittelt werden, mit welcher ein eine Turbine T antreibender Elektromotor M angesteuert werden muss, um die gewünschte Abwurfgeschwindigkeit zu erreichen. Hierzu ist dem Elektromotor M ein Frequenzrichter FU vorgeschaltet, der elektrische Kennwerte wie Frequenz, Strom, Spannung, elektrische Leistung oder Drehmoment an die Steuerung S ausgibt. Durch Ansteuern des Frequenzumrichters FU mit der Vorgabe einer Frequenz F kann der Elektromotor M mit der gewünschten Drehzahl betrieben werden, um die Turbine T, d.h. eine der Turbinen 12 oder 14, anzutreiben.

Um sicherzustellen, dass der gewünschte Strahlmitteldurchsatz m tatsächlich erzielt wird, ist in der Steuerung S eine weitere Kennlinie K2 hinterlegt, die als Regelungsgrundlage mit der Steuerung S verknüpft ist. Diese drehzahlunabhängige Kennlinie K2 spiegelt die Abhängigkeit des Strahlmitteldurchsatzes m von dem Öffnungsgrad des Stellelementes 38, 40 wider. Insofern kann bei Kenntnis des gewünschten Strahlmitteldurchsatzes m aus der Kennlinie K2 der erforderliche Öffnungsweg des Stellelementes 38, 40 ausgelesen werden, so dass eine erforderliche Stellgröße Δs von der Steuerung S ausgegeben werden kann, um einen Aktor A in Form des jeweiligen Stellelementes 38, 40 so anzusteuern, dass der gewünschte Öffnungsweg, der einem bestimmten, vorher beim automatisierten Einfahren der Kennlinie hinterlegten, Strahlmitteldurchsatz entspricht.

Fig. 2 verdeutlicht ferner, dass die Steuerung S mit einer Anzeige D versehen ist, auf der sämtliche Betriebsparameter und Auswertungen angezeigt werden können. Weiterhin ist die Steuerung S mit einer Schnittstelle I versehen, mit der die Steuerung mit einem privaten oder öffentlichen Netzwerk, insbesondere browserbasiert, verbindbar ist.

Eine maximale Leistung der Turbinen wird erst dann erzielt, wenn eine bestimmte Strahlmittelmenge von der Turbine abgeworfen wird. Grundsätzlich können die Turbinen Strahlmittelmengen in der Größenordnung zwischen etwa 100 und 1000 kg/min abwerfen. Für einen maximalen Strahlmitteldurchsatz wird der Motor (beispielsweise ein Asynchronmotor) der Turbine in der Regel auf seine Nenndrehzahl von beispielsweise 3000 U/min gebracht. In der Praxis wird der maximale, von der jeweiligen Turbine bauartbedingt durchsetzbare Massenstrom an Strahlmittel durch die Software der Steuerung errechnet und über den Aktor 44 begrenzt. Der Anschlag 54 stellt den Referenzanschlag zur Initialisierung der Startposition dar.

Weiterhin kann der Aktor 52 auch für eine Notaus-Funktion herangezogen werden. Sollte in der Strahlanlage ein Stromausfall entstehen, so reicht die im System gespeicherte Luft aus, um den Pneumatikzylinder 52 in seine Schließstellung zu bewegen, so dass der Schieber geschlossen wird.

Zur Ermittlung der Kennlinie K2 ist in der Steuerung eine spezielle Routine vorgesehen, die den jeweiligen Schieber der Stellelemente 38, 40 mit Hilfe des elektromechanischen Zylinders 44 schrittweise, beispielsweise mit einem Hub von jeweils 1 mm, öffnet. Diese Position wird dann für eine bestimmte Zeit gehalten und mit Hilfe der durch den Frequenzumrichter ausgegebenen Leistung und Frequenz kann der dazugehörige Strahlmitteldurchsatz berechnet und gespeichert werden. Diese Prozedur wird dann automatisch oder manuell bis zu einem vordefinierten maximalen Strahlmitteldurchsatz durchgeführt, so dass sich die Kennlinie K2 ergibt.

Mit der vorstehend beschriebenen Steuerung der Strahlanlage sowie den beschriebenen Verfahrensweisen kann eine Prozess- und Systemüberwachung unter den Gesichtspunkten Teilequalität, geleistete Strahlarbeit, Medienverbräuche, Anlagenstatus, Strahlleistungsüberwachung, Verschleiß, vorbeugende Wartung, Instandhaltung, Nutzungsgraderfassung und Personalkosten in Echtzeit erfolgen. Bei der beschriebenen Steuerung werden erfindungsgemäß die folgenden Daten in Echtzeit erfasst, ausgewertet und visualisiert: Medienverbräuche (Strahlmittel, Druckluft und elektrische Energie), geleistete Strahlarbeit, elektrische Leistung, Produktivität (Nutzungsgrad), Ausbringung der Maschine, Volumenströme der Entstaubung, Volumenstrom der Strahlmittelmenge in der Windsichtung, Volumenströme der Strahlmittelmengen an den Strahlmittelbeschleunigungssystemen, Volumenstrom des Strahlmittels in der Windsichtung, Strahlleistung, Laufzeiten der Aktoren.

Die folgenden Parameter und Berechnungen werden zur Auswertung der erfassten Daten herangezogen:

- Turbinendrehzahl $n_{Turbine}$

  Nenndrehzahl der entsprechenden Strahlturbine während der Teilebearbeitung in Umdrehungen pro Minute. Ermittlung: Direkterfassung über den Frequenzumrichter.

- Stromaufnahme $I_{Turbine}$

  Stromaufnahme des entsprechenden Turbinenmotors während der Teilebearbeitung in Ampere. Ermittlung: Direkterfassung über den Frequenzumrichter, oder alternativ über einen separaten induktiven Stromwandler.

- Elektrische Leistung $P_{el}$

  Elektrische Leistung des entsprechenden Turbinenmotors während der Teilebearbeitung in Kilowatt. Ermittlung: Direkterfassung über den Frequenzumrichter, oder alternativ über eine Berechnung in der Steuerung mit Hilfe eines Stromwandlers.

- Drehmoment $M_{Turbine}$

  Drehmoment des entsprechenden Turbinenmotors während der Teilebearbeitung in Newton Meter. Ermittlung: Direkterfassung über den Frequenzumrichter

- Abwurfgeschwindigkeit vs

  Geschwindigkeit des Strahlmittels beim Verlassen der Wurfschaufel in Meter pro Sekunde. Ermittlung: Lineare Gerade in Abhängigkeit der Turbinendrehzahl. Vorgabe durch turbinenabhängige Vorparametrierung

- Strahlmitteldurchsatz m

  Menge an Strahlmittel, welches die Strahlturbine während der Bearbeitung durchsetzt in Kilogramm pro Minute. Ermittlung:

$$(2* P_{el}*Turbinenwirkungsgrad) / v_S^2$$

- Strahlleistung Ps

  Kinetische Leistung der Strahlturbine während der Teilebearbeitung in Kilowatt. Ermittlung:

$$P = \dot{m} * v_S^2 * 0{,}5$$

- Strahlzeit TTurbine
  Die Strahlzeit ist jene Zeit, in der die Strahlturbine unter Last läuft, und der Schieber den Strahlmittefluss freigibt.

- Strahlarbeit $W_{Turbine}$

  Arbeit der Strahlturbine während der Teilebearbeitung in Kilowattstunden.

Ermittlung:

$$W_{Turbine} = P_S * T_{Turbine}$$

- Strahlwirkungsgrad $\eta_{Turbine}$

Relation zwischen elektrischer Leistung des Turbinenmotors und der Strahlleistung während der Teilebearbeitung in Prozent.

Ermittlung:

$$P_S / Pel * 100$$

Erfindungsgemäß werden die in der Strahltechnik einzigartigen Überwachungs- und Auswertfunktionen im Wesentlichen in drei Hauptgruppen unterteilt und gegliedert, nämlich in Teilequalität, Betriebsparameter und Instandhaltung.

Zur Erfassung und Auswertung der Teilequalität sind an der Strahlmittelreinigungseinheit, vorzugsweise in Strahlmittelförderrichtung hochzählend und vorzugsweise über die komplette Breite des von Strahlmittel durchströmbaren Querschnitts, elektrische, elektromagnetische, induktive, kapazitive, optische, mechanische oder auf Schall basierende Sensoren angebracht, welche das durchfließende Strahlmittel erkennen. Die Sensoren können auch als Einheit oder Sensorsystem ausgeführt sein. Detektieren alle Sensoren Strahlmittel, bedeutet dies, dass momentan der maximal mögliche Strahlmitteldurchsatz der Anlage (100%) erreicht ist. Ebenso bedeutet die Belegung der Hälfte der Sensoren, dass die Anlage momentan mit einem 50%igen Strahlmitteldurchsatz arbeitet. In Verbindung mit der erfassten Strahlleistung der Strahlmittebeschleunigungssysteme (es können erfindungsgemäß anstelle von Turbinen auch Druckluftstrahlsysteme zur Anwendung kommen) und den daraus bekannten Strahlmittelmengen für die einzelnen Beschleunigungssysteme wird über eine Software die zu erwartende Belegung der Sensoren ermittelt. Eine Auswertung der Plausibilität von der momentan applizierten Strahlmittelmenge in Relation zur Erfassung der Belegungsbreite des Strahlmittelaufbereitungssystems (Windsichter), gibt die Möglichkeit, Rückschlüsse in Bezug auf den aktuellen Zustand der Strahlanlage und die Gleichmäßigkeit des zurzeit parametrierten Prozesses zu generieren. Um eine Beeinträchtigung des Reinigungsergebnisses der Strahlmittelaufbereitung, in diesem Fall der Sichtung, zu minimieren, sind die Absaugstellen im System so angeordnet, dass ein Luft Kurzfluss verhindert wird und eine gleichmäßige Durchströmung des Strahlmittelvorhangs im Windsichter gegeben ist. Ebenfalls wird der von der Strahlmittelreinigung abgesaugte Volumenstrom erfasst, aufgezeichnet und ausgewertet.

Durch den Materialabtrag der beim Strahlprozess erfolgt, entsteht Abrieb in Form von Staub, der sich während des Strahlprozesses in der Luft der Strahlkammer ansammelt. Um die Sauberkeit der Bauteile nach dem Strahlen zu gewährleisten, wird die Strahlkammer (auch als Strahlraum bezeichnet) von Luft durchspült und über eine geeignete Abluftanlage abgesaugt. Hierbei ist es wichtig, die abgesaugte Luftmenge immer gleich zu halten, damit das Reinigungsergebnis an den Bauteilen und die Sauberkeit der Bauteiloberflächen immer gleichbleiben. Zweckmäßig kann an einer erfindungsgemäßen Strahlanlage eine Messung des Absaugvolumenstroms der Strahlkammer und des Strahlmittelsichters, oder eines von beidem, und die Messung des Gesamtvolumenstromes erfolgen, sodass die Differenz des Gesamtvolumenstromes abzüglich des jeweiligen Teilvolumenstromes den anderen Volumenstrom ergibt. Die Erfassung der Volumenströme erfolgt durch Differenzdruckmesssysteme, Staurohre, Flügelanemometer oder kalorimetrische Messsensoren. Die Überwachung, Aufzeichnung und Auswertung der Volumenströme gibt direkten Aufschluss über die produzierte Teilequalität in Bezug auf die Oberflächenreinheit (Staubfreiheit) der Bauteile nach dem Strahlprozess und die Konstanz der Strahlmittelreinigung. Um die Volumenströme ständig konstant zu halten, ist der Antriebsmotor der Absauganlage zweckmäßig mit einem Frequenzumrichter ausgestattet, über diesen durch eine Drehzahl- und Leistungsregelung die Konstanz der Volumenströme sichergestellt wird.

Als Beispiel sei eine Strahlanlage mit vier Turbinen beschrieben, die jeweils, aufgrund ihrer Größe und Leistung, 250 kg/min applizieren können, also zusammen 1000 kg/min. Wird nun an den Turbinen der Strahlmitteldurchsatz auf 125 kg/min und Turbine reduziert, so reduziert sich auch der Gesamtvolumenstrom des Strahlmittels auf 50%, was die Sensorik in der Strahlmittelaufbereitung erkennt. Sofern diese Menge zur erwartenden Menge passt, wird der Anlagenstatus als in Ordnung ausgewiesen. Sollen beispielsweise alle vier Turbinen mit jeweils 250 kg/min laufen, was in diesem Fall 100% des Strahlmittelflusses entspricht, und die Sensorik in der Strahlmittelaufbereitung detektiert mit einer geringeren Belegung einen abweichenden Strahlmittelfluss, so wird dies im Anlagenstatus ausgewiesen. Somit erfolgt eine Darstellung in Echtzeit und die Daten werden ebenfalls in einer vorteilhafterweise skalierbaren Auswertung gesammelt, aufbereitet und visualisiert. Dadurch ist ein Nachweis eines gleichmäßigen Bearbeitungsergebnisses, in Verbindung mit der Strahlleistungsüberwachung, beziehungsweise der Durchsatzüberwachung, möglich.

Eine weitere vorteilhafte Anordnung ist so ausgeführt, dass der maximale Strahlmitteldurchsatz eines Systems bekannt ist und über die belegten Sensoren im Strahlmittelsichter eine von einem Aktor betätigte Stauklappe die Verteilbreite des Strahlmittels in Abhängigkeit von der durchgesetzten Menge regelt. So sind eine ständig gleichbleibende Strahlmittelverteilung und damit eine stabile und bestmögliche Strahlmittelreinigung erzielbar.

Ebenfalls vorteilhaft ist eine Überwachung bzw. Ausrüstung des Aktors oder der Strahlmittelstauklappe mit einem Messsystem für den Weg bzw. Öffnungswinkel. So können über eine Regelung in Verbindung mit den bekannten zu erwartenden Strahlmitteldurchsätzen bereits voreingestellte Öffnungswinkel bzw. Öffnungsweiten angefahren werden, von denen aus dann nur noch eine Feinregelung erfolgen muss. Ein solches System ist in der Lage unabhängig von Takt- oder Chargenzeiten die Strahlmittelreinigung und Verteilung stets gleichmäßig stabil und optimal zu halten.

Die Strahlleistung errechnet sich aus der Masse und der Geschwindigkeit des beschleunigten Strahlmittels. So wird beispielsweise über die Drehzahl einer Turbine, den Strahlmitteldurchsatz, die Reibung und ihren bekannten Wirkungsgrad in einem Kennlinienfeld der Software die aktuell abgegebene Strahlleistung errechnet. In Echtzeit erfasste Parameter wie die Stromaufnahme sowie die Turbinendrehzahl werden kontrolliert und geregelt. Über das Stellelement wird die entsprechende Strahlmittelmenge dem Strahlmittelbeschleunigungssystem (Turbine, Druckluftstrahlsystem) zugeführt.

Dem heutigen Stand der Technik entspricht es, hier zugrundeliegende Bearbeitungsparameter als beispielsweise Drehzahlwerte und Soll-Stromvorgaben zu hinterlegen. Bei der mit der Erfindung abgebildeten Lösung erfolgt die Parametrierung der Werte in der Bearbeitungsrezeptur jedoch mit direkten Absolutwerten, mit den Parametern Strahlmittelmenge (in kg/min), Abwurfgeschwindigkeit (in m/s) und/ oder Strahlleistung (in Kilowatt) auf einer Skala von 0 - 100% wählbar.

Erfindungsgemäß entstehen folgende Vorteile: Eine immer optimale Auslastung der verfügbaren und abrufbaren Turbinenleistung, auch im Feldkonstantbereich, in dem diese nicht der Nennleistung des Antriebsmotors entspricht. Eine kürzeste Einstellzeiten der Stellglieder der Strahlmitteldosierung zu den Strahlmittelbeschleunigungssystemen. Ein Verhindern von volumenbedingten Durchsatzstörungen an den Strahlmittelbeschleunigungssystemen und eine gleichbleibende Strahlmittelkornverteilung im Betriebsgemisch.

Die vorgewählte und applizierte Strahlleistung wird pro Beschleunigungssystem erfasst und die geleistete Strahlarbeit wird ermittelt. Die zusammengefasste, geleistete Strahlarbeit der gesamten Maschine wird so als Grundlage für die Auswertung verschiedenster Kosten, der Maschinenausbringung und der Medienverbräuche als Basis herangezogen. Darstellbar sind beispielsweise der detaillierte Strahlmittelverbrauch und die bearbeitete Teilemenge pro Kilowattstunde oder Megajoule geleistete Strahlarbeit. Der Strahlmittelverbrauch wird vorzugsweise über ein gravimetrisches, volumenstrom- oder gewichtsbasierendes Dosiersystem erfasst, welches bei Bedarf die von der Maschine angeforderte Strahlmittelmenge nachdosiert.

Die Aufzeichnung, Komprimierung und Archivierung dieser Daten bietet die Möglichkeit eines genauen Rückblicks und eines expliziten Vergleichs verschiedener Zeiträume. Ebenfalls möglich werden so Vorausplanungen und beispielsweise Kapazitätsprognosen.

Ebenfalls in Echtzeit erfasst und ausgewertet werden die aufgenommen Ströme und die abgegebenen Leistungen aller, oder der wesentlichen, sich an der Maschine befindlichen elektrischen Antriebe. Über ein zentrales Leistungsmessgerät wird die elektrische Gesamtleistung der Anlage erfasst und in Echtzeit aufgezeichnet. Parallel zu dieser Erfassung und Auswertung werden die Betriebszustände der Maschine überwacht, erfasst und ausgewertet.

Zur übersichtlichen Darstellung der Betriebszustände, sowie zur Ermittlung der technischen Verfügbarkeit der Maschine, wird ein Betriebszustandsmodell mit folgenden Parametern genutzt:

Ausgeschaltet $T_{Aus}$

Zeit bei der ein Edge-Device keine Daten von der Steuerung (SPS) bekommt, wenn diese ausgeschaltet ist. Diese Zeit soll in den Diagrammen nicht automatisch vorkommen, sondern extra eingeblendet werden können.

Strahlzeit Ts

Zeit während die Turbinen unter Last laufen (Muschelschieber auf)

Nebenzeit $T_N$

Zeit während der Bearbeitung, bei der keine Turbinenlast stattfindet, z. B. Be- und Entladen, Tisch drehen, etc.

Bereitzeit $T_{Br}$

Der Teil der potentiellen Betriebszeit $T_{Betr}$, in der die Maschine nicht aktiv genutzt wird.

Rüstzeit $T_R$

Zeit für das Rüsten der Anlage und das Wechseln von Betriebsmitteln (Strahlmittel). Über eine gesonderte Seite auf einem HMI wird die Zeit entsprechend an- und abgewählt (gestartet und gestoppt). Der Bediener muss vor dem Rüsten der Anlage durch Tastendruck den Vorgang quittieren. Die SPS schreibt die Rüstzeit bis zum erneuten Betätigten des Tasters mit. Alternativ wird die Zeit auch gestoppt mit dem Umschalten in Automatik.

Maschine auf Nothalt $\rightarrow T_A$ bis Bediener auf Rüsten drückt $\rightarrow T_R$

Wartungszeit Tw

Hierunter fallen alle nach einem Wartungsplan vorgesehenen Arbeiten, z. B. geplante Instandhaltungsumfänge, Maschinenreinigung und Probeläufe nach Wartung. Über eine gesonderte Seite auf der HMI wird die Zeit entsprechend an- und abgewählt (gestartet und gestoppt). Die SPS schreibt die Wartungszeit bis zum erneuten Betätigten des Tasters mit. Alternativ wird die Zeit auch gestoppt mit dem Umschalten in Automatik.

Technische Ausfallzeit $T_A$

Die Summe aller Ausfallzeiten, die eine Ursache in Mängeln der Konzeption oder Ausführung der Maschine haben. Dies sind z. B. Instandsetzung einer Störung, etc. Die Ausfallzeit ist die Zeitdauer vom Aufkommen einer Störung, bis zu deren Beseitigung, also die Zeit bis die Anlage wieder in einen betriebsbereiten Zustand versetzt wurde.

Zusammengefasste Zeiten und Verhältnisse

Nutzungsgrad $T_{Ng}$

Beschreibt das Verhältnis von Bereitzeit $T_{Br}$ und Betriebszeit $T_{Betr}$ in folgender Formel:

$$T_{Ng} = ((T_{Betr} - T_{Br}) / T_{Betr}) = \underline{T_{Nu}} / T_{Betr}$$

Nutzungszeit $T_{Nu}$

Während der Nutzungszeit produziert die Maschine im vollen Leistungsumfang. Also die Summe aus Strahlzeit Ts und Nebenzeit $T_N$.

Die Nutzungszeit ist die Zeit, wenn die Automatik gestartet ist und keine Störung ansteht (Maschine läuft).

Betriebszeit $T_{Betr}$

Betriebszeit ist die Zeit in der die Anlage potentiell produzieren könnte

Verfügbarkeit Tv

Die Anlagenverfügbarkeit gibt das Verhältnis zwischen technischer Ausfallzeit $T_A$ und Belegungszeit $T_B$ in "%" an.

$$\text{Ermittlung der Verfügbarkeit } V_T = 100\% - ((T_A/T_B) * 100\ \%)$$

Belegungszeit $T_B$

Da beim Kunden oft unterschiedliche und auch wechselnde Schichtmodell vorherrschen, ist eine Vorgabe der Belegungszeit nicht immer vorteilhaft. Deshalb kann die Belegungszeit TB mit Hauptschalter "Ein" auf Start, und mit Hauptschalter "Aus" auf Stopp gesetzt werden. Es ist also die Summe an Zeiten, an denen der Hauptschalter der Maschine eingeschaltet wurde.

Das Edge Device kann inklusive benötigter Peripherie (z.B. 24 V DC-Netzteil und Sicherung) vor dem Hauptschalter verdrahtet und installiert werden. Die benötigten Zeitstempel werden auf Edge-Seite generiert.

Eine weitere Komponente der Erfindung sind die Überwachung und Wechselempfehlung der wichtigsten Verschleißteile durch detaillierte Verschleißzustandserfassungssysteme, eine hinterlegte einzelteilbezogene Verschleißteilhistorie und weiterführende Standzeitprognosen. Erfindungsgemäß sind so Wartungen und Kontrollen präzise planbar und eine betreiberorientierte Ersatzteillogistik ohne verschwendende Lagerhaltung kann umgesetzt werden.

Die sich mit der Erfindung ergebenden weiteren Vorteile sind: genaue Erfassung der verrichteten Strahlarbeit; detaillierte Verbrauchserfassung und Verbrauchskontrolle der Medien wie Strahlmittel, elektrische Energie und Druckluft in Bezug auf die geleistete Strahlarbeit; Überwachung und Wechselempfehlung der wichtigsten Verschleißteile durch detaillierte Verschleißzustandserfassungssysteme, eine einzelteilbezogene Verschleißteilhistorie und weiterführende Standzeitprognosen; Erfassung und mögliche Auswertung der Maschinenausbringung und der Bearbeitungskosten von Einzelbauteilen oder Bauteilchargen; genaue Nutzungsgraderfassung der Maschine und/oder der Maschinenbelegung (Belegungsfaktor); Kapazitätsprognosen und Vorausplanungen; bestmögliche Qualitätskontrolle.

**Patentansprüche**

1. Verfahren zum Betrieb einer Strahlanlage (10), die eine Steuerung (S) und zumindest eine von einem Elektromotor (M, 11) angetriebene Turbine (T, 12, 14) aufweist, mit der körniges Strahlmittel beschleunigt und in einer Strahlkammer (16) auf Werkstücke abgeworfen wird,

   **dadurch gekennzeichnet, dass**
   in der Steuerung (S) eine gewünschte Abwurfgeschwindigkeit (vs) und eine gewünschte Strahlleistung (Ps) der Turbine (T, 12, 14) eingegeben werden, aus der vorgegebenen Abwurfgeschwindigkeit (vs) und der Strahlleistung (Ps) ein erforderlicher Strahlmitteldurchsatz (m) berechnet wird, und
   auf Grundlage des berechneten Strahlmitteldurchsatzes die Menge an Strahlmittel eingestellt wird, das der Turbine (T, 12, 14) zugeführt wird.

2. Verfahren nach Anspruch 1,
   **dadurch gekennzeichnet,**
   **dass** die Abwurfgeschwindigkeit (vs) und die Strahlleistung (Ps) in der Steuerung (S) als prozentualer Wert oder Absolutwert eingegeben werden.

3. Verfahren nach Anspruch 1 oder 2,
   **dadurch gekennzeichnet,**
   **dass** in der Steuerung (S) eine Kennlinie (K1) hinterlegt wird, welche die Abhängigkeit der Abwurfgeschwindigkeit (vs) der Turbine (T, 12, 14) von der Drehzahl (f) des Elektromotors (M, 11) wiedergibt.

4. Verfahren nach einem der vorstehenden Ansprüche,
   **dadurch gekennzeichnet,**
   **dass** die Einstellung der Menge an Strahlmittel durch ein von der Steuerung (S) angesteuertes Stellelement (38, 40) erfolgt.

5. Verfahren nach Anspruch 4,
   **dadurch gekennzeichnet,**
   **dass** in der Steuerung (S) eine Kennlinie (K2) hinterlegt wird, welche die Abhängigkeit des Strahlmitteldurchsatzes (m) von dem Öffnungsgrad des Stellelementes (38, 40) wiedergibt.

6. Verfahren nach Anspruch 5,
   **dadurch gekennzeichnet,**
   **dass** die Kennlinie (K2) dadurch erzeugt wird, dass das Stellelement (38, 40) in verschiedene Positionen gebracht wird, und dass zu jeder Position aus der aktuellen Strahlleistung und der aktuellen Abwurfgeschwindigkeit der aktuelle Strahlmitteldurchsatz berechnet und abgespeichert wird.

7. Verfahren nach einem der vorstehenden Ansprüche 4 - 6,
   **dadurch gekennzeichnet,**
   **dass** das Stellelement (38, 40) bei Betriebsbeginn in eine vorgegebene Endstellung gefahren wird, wobei insbesondere eine bei Inbetriebnahme des Stellelementes angelernte Endstellung initialisiert wird.

8. Verfahren nach einem der vorstehenden Ansprüche 5 - 7,
   **dadurch gekennzeichnet,**

**dass** mehrere Kennlinien (K2) in zeitlichen Abständen in der Steuerung (S) hinterlegt werden, und dass bei einer signifikanten Veränderung der Kennlinien von der Steuerung (S) eine Störungs- oder Verschleißmeldung ausgegeben wird.

9. Verfahren nach einem der vorstehenden Ansprüche,
**dadurch gekennzeichnet,**
**dass** der Elektromotor (M, 11) von einem Frequenzumrichter (FU) angesteuert wird, und dass von diesem die Drehzahl (f), die Stromaufnahme (I), die elektrische Leistung (Pel) und/oder das Drehmoment des Elektromotors an die Steuerung (S) übertragen wird oder werden.

10. Verfahren nach einem der vorstehenden Ansprüche,
**dadurch gekennzeichnet,**
**dass** die tatsächliche Strahlleistung der Turbine (12, 14) aus der elektrischen Leistung (Pel) des Elektromotors (11) und einem zuvor ermittelten Turbinenwirkungsgrad berechnet wird.

11. Verfahren nach einem der vorstehenden Ansprüche,
**dadurch gekennzeichnet,**
**dass** in der Steuerung (S) ein Grenzwert für einen maximal zulässigen Strahlmitteldurchsatz (m) eingegeben wird.

12. Verfahren nach einem der vorstehenden Ansprüche,
**dadurch gekennzeichnet,**
**dass** ein Vorratsbehälter (18) für Strahlmittel vorgesehen wird, und dass die räumliche Verteilung des in den Vorratsbehälter (18) einzubringenden Strahlmittels detektiert wird.

13. Verfahren nach Anspruch 12,
**dadurch gekennzeichnet,**
**dass** in der Steuerung (S) eine Prozessüberwachung erfolgt, indem eine Korrelation zwischen der detektierten räumlichen Verteilung des in den Vorratsbehälter (18) einzubringenden Strahlmittels und dem berechneten Strahlmitteldurchsatz (m) hergestellt wird.

14. Verfahren nach einem der vorstehenden Ansprüche,
**dadurch gekennzeichnet,**
**dass** sowohl aus der Strahlkammer (16) wie auch aus dem Bereich einer Strahlmittelreinigungseinheit (20) Luft abgesaugt wird, und dass der Volumenstrom beider Absaugungen (26, 28) erfasst und überwacht wird.

15. Verfahren, insbesondere nach einem der vorstehenden Ansprüche,
**dadurch gekennzeichnet,**
**dass** die Strahlleistung der Turbine (T, 12, 14) und das Produkt aus Strahlleistung und Strahlzeit ermittelt und von der Steuerung (S) als Strahlarbeit angezeigt wird.

16. Verfahren nach einem der vorstehenden Ansprüche,
**dadurch gekennzeichnet, dass** die tatsächlich geleistete Strahlarbeit der Strahlmittelbeschleunigungseinrichtungen erfasst und abgespeichert wird, wobei insbesondere der Strahlmittelverbrauch und/oder die bearbeitete Teilemenge, welche ebenfalls erfasst werden, mit der geleisteten Strahlarbeit ins Verhältnis gesetzt werden und von der Steuerung (S) angezeigt werden.

17. Strahlanlage, insbesondere zur Durchführung eines Verfahrens nach einem der vorstehenden Ansprüche, die eine Steuerung (S) und zumindest eine von einem Elektromotor (M, 11) angetriebene Turbine (T, 12, 14) aufweist, mit der Strahlmittel beschleunigt und in einer Strahlkammer (16) abgeworfen wird,
**dadurch gekennzeichnet,**
**dass** die Steuerung (S) dazu ausgebildet und eingerichtet ist, aus einer vorgegebenen Abwurfgeschwindigkeit (vs) und einer vorgegebenen Strahlleistung (Ps) einen erforderlichen Strahlmitteldurchsatz zu berechnen, und auf Grundlage des berechneten Strahlmitteldurchsatzes (m) eine Menge an Strahlmittel vorzugeben, das der Turbine (T, 12, 14) zugeführt wird.

18. Strahlanlage nach Anspruch 17,
**dadurch gekennzeichnet,**
**dass** die Steuerung (S) in Echtzeit die geleistete Strahlarbeit der Strahlanlage (10) ermittelt und Betriebsparameter der Strahlanlage im Verhältnis zur geleisteten Strahlarbeit anzeigt und/oder abspeichert.

19. Strahlanlage nach Anspruch 17 oder 18,
**dadurch gekennzeichnet,**
**dass** für die Einstellung des Strahlmitteldurchsatzes ein Schieber vorgesehen ist, der von einem mit einer Wegmessung versehenen Aktor (44), insbesondere einem elektromechanischen Zylinder, verstellbar ist, wobei der Schieber von einem weiteren Aktor (48), insbesondere einem pneumatischen Zylinder, gegen einen festen Anschlag (54) bewegbar ist.

20. Strahlanlage nach Anspruch 17, 18 oder 19,
**dadurch gekennzeichnet,**
**dass** die Steuerung (S) mit einer Schnittstelle (I) zur Übertragung von Daten an ein öffentliches oder privates Netzwerk versehen ist.

Fig. 1

# Fig. 2

$$\dot{m} = \frac{2 \cdot P_s}{V_s^2}$$

Fig. 3

38,40

50

52

54

42

48

46

44

Europäisches Patentamt
European Patent Office
Office européen des brevets

**EUROPÄISCHER RECHERCHENBERICHT**

Nummer der Anmeldung

EP 22 17 5467

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 10 2016 223190 B3 (EISENWERK WÜRTH GMBH [DE]) 19. Oktober 2017 (2017-10-19) * Absätze [0034], [0040] – [0043], [0049] – [0052]; Abbildung 1 * ----- | 1-20 | INV. B24C7/00 ADD. B24C3/14 |
| Y | US 2021/162563 A1 (MEUKENS KOEN [BE] ET AL) 3. Juni 2021 (2021-06-03) * Absätze [0026], [0035], [0041], [0046], [0060], [0064], [0073]; Abbildung 1 * ----- | 1-20 | |
| A | US 2018/264625 A1 (SCHNEIDAU VOLKER [DE] ET AL) 20. September 2018 (2018-09-20) * Absätze [0003], [0004], [0008], [0009], [0037] * ----- | 1,17 | |
| A | US 4 277 918 A (BASS DIETER) 14. Juli 1981 (1981-07-14) * Spalte 2, Zeile 25 – Zeile 45 * * Spalte 2, Zeile 60 – Spalte 3, Zeile 11 * * Spalte 4, Zeile 55 – Spalte 5, Zeile 8 * ----- | 1,17 | RECHERCHIERTE SACHGEBIETE (IPC) B24C |

Der vorliegende Recherchenbericht wurde für alle Patentansprüche erstellt

| Recherchenort | Abschlußdatum der Recherche | Prüfer |
|---|---|---|
| Den Haag | 10. Oktober 2022 | Beltzung, J |

**ANHANG ZUM EUROPÄISCHEN RECHERCHENBERICHT**
**ÜBER DIE EUROPÄISCHE PATENTANMELDUNG NR.**

EP 22 17 5467

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-10-2022

| Im Recherchenbericht angeführtes Patentdokument | Datum der Veröffentlichung | Mitglied(er) der Patentfamilie | | Datum der Veröffentlichung |
|---|---|---|---|---|
| DE 102016223190 B3 | 19-10-2017 | DE | 102016223190 B3 | 19-10-2017 |
| | | DE | 202017105608 U1 | 15-11-2017 |
| | | DK | 3523091 T3 | 19-04-2022 |
| | | EP | 3523091 A1 | 14-08-2019 |
| | | EP | 3792002 A1 | 17-03-2021 |
| | | ES | 2913060 T3 | 31-05-2022 |
| | | PL | 3523091 T3 | 20-06-2022 |
| | | WO | 2018065220 A1 | 12-04-2018 |
| US 2021162563 A1 | 03-06-2021 | BE | 1026552 A1 | 13-03-2020 |
| | | CN | 112584973 A | 30-03-2021 |
| | | EP | 3840917 A1 | 30-06-2021 |
| | | US | 2021162563 A1 | 03-06-2021 |
| | | WO | 2020038605 A1 | 27-02-2020 |
| US 2018264625 A1 | 20-09-2018 | DE | 102015000632 A1 | 28-07-2016 |
| | | EP | 3247536 A1 | 29-11-2017 |
| | | SI | 3247536 T1 | 29-01-2021 |
| | | US | 2018264625 A1 | 20-09-2018 |
| | | WO | 2016116277 A1 | 28-07-2016 |
| US 4277918 A | 14-07-1981 | EP | 0004936 A1 | 31-10-1979 |
| | | ES | 479779 A1 | 16-01-1980 |
| | | IN | 149706 B | 20-03-1982 |
| | | JP | S5915789 B2 | 11-04-1984 |
| | | JP | S54141488 A | 02-11-1979 |
| | | US | 4277918 A | 14-07-1981 |
| | | ZA | 791725 B | 30-04-1980 |

EPO FORM P0461

Für nähere Einzelheiten zu diesem Anhang : siehe Amtsblatt des Europäischen Patentamts, Nr.12/82